# EUROPÄISCHE PATENTSCHRIFT

(11) **EP 0 428 820 B1**
(45) Veröffentlichungstag und Bekanntmachung des Hinweises auf die Patenterteilung: **03.08.1994**
(21) Anmeldenummer: 90104388.5
(22) Anmeldetag: 08.03.1990
(51) Int. Cl.: B65G 47/31, B65B 35/24, B65G 43/08

(54) **Verfahren und Vorrichtung zur Förderung und Synchronisierung der Bewegung von Gegenständen**
Method and device for conveying and synchronisation of the movement of objects
Méthode et dispositif pour convoyer et synchroniser le déplacement d'objets

(30) Priorität: 23.11.1989 DE 3938719
(43) Veröffentlichungstag der Anmeldung: 29.05.1991
(73) Patentinhaber: ROVEMA VERPACKUNGSMASCHINEN GMBH, 35461 Fernwald (DE)
(72) Erfinder: Schommartz, E., D-6054 Rodgau (DE); Dietz, H., D-6336 Solms (DE); Görsdorf, R., D-6301 Biebertal 1 (DE); Hofmann, R., D-6301 Kinzenbach (DE); Petry, M., D-6300 Giessen (DE)
(74) Vertreter: Missling, Arne, Dipl.-Ing.

(56) Entgegenhaltungen:
- DE-U- 8 518 948
- GB-A- 1 587 715
- GB-A- 2 197 283
- GB-A- 2 218 679
- US-A- 4 640 408
- US-A- 4 653 630

## Beschreibung

Die Erfindung bezieht sich auf ein Verfahren und eine Vorrichtung zur Förderung und Synchronisierung der Bewegung von Gegenständen. Im Speziellen bezieht sich die Erfindung auf ein Verfahren, bei welchem die Gegenstände von einem ersten Förderband auf zumindest ein Synchronisierband, von diesem auf ein zweites Förderband und nachfolgend auf ein Aufnahmeband geleitet werden, wobei das erste und das zweite Förderband mit gleicher Geschwindigkeit bewegt werden. Die erfindungsgemäße Vorrichtung umfaßt ein erstes Förderband und ein zweites Förderband, welches einem Aufnahmeband vorgeordnet ist, sowie eine zwischen dem ersten und dem zweiten Förderband angeordnete Synchronisiereinrichtung, welche zumindest ein Synchronisierband umfaßt, wobei das erste und das zweite Förderband mit gleicher Geschwindigkeit angetrieben ist.

Aus der DE-PS 28 10 979 ist ein Verfahren und eine Vorrichtung zur Abstimmung der Zeitfolge von Gegenständen an den Arbeitstakt einer sie aufnehmenden Maschine bekannt. Dieses Verfahren bzw. diese Vorrichtung ist beispielsweise in Verbindung mit Verpackungsmaschinen oder ähnlichem in Verwendung, bei welchen es erforderlich ist, die jeweiligen Gegenstände phasengenau zu der aufnehmenden Maschine zuzuführen, beispielsweise um sie in Verpackungen einzubringen. Da auf den vorgeordneten Förderwegen, bedingt durch die Herstellung der Gegenstände und durch die Geometrie der Förderwege unterschiedliche Abstände zwischen den einzelnen Gegenständen vorliegen können, ist es erforderlich, die Gegenstände entsprechend auszurichten bzw. zu synchronisieren, um zu verhindern, daß diese in falscher Weise an die aufnehmende Maschine übergeben werden.

Bei der bekannten Vorrichtung sind insgesamt drei Förderbänder vorgesehen, zwischen welchen jeweils Synchronisiereinrichtungen angeordnet sind. Die drei Förderbänder laufen jeweils mit der gleichen, synchronen Geschwindigkeit, während die zwischengeordneten Synchronisiereinrichtungen dazu dienen, die jeweiligen Gegenstände zu beschleunigen bzw. abzubremsen, so daß deren Abstände zueinander veränderbar sind und die Lage des jeweiligen Gegenstandes an die Phase der nachgeordneten aufnehmenden Maschine angepaßt wird. Das dabei zugrundeliegende Prinzip besteht darin, daß die nachgeordnete, aufnehmende Maschine mit der gleichen Geschwindigkeit betrieben wird, wie die drei Förderbänder, so daß ein Geschwindigkeitsunterschied nur im Bereich der Synchronisierbänder vorliegen kann. Daraus ergibt sich der Nachteil, daß die beiden in ihrer Wegstrecke begrenzt ausgebildeten Synchronisiereinrichtungen die einzige Möglichkeit darstellen, eine Anpassung an die jeweilige Phase des Gegenstandes vorzunehmen. Die somit mit dieser Vorrichtung zu überbrückende Phasendifferenz ist deshalb relativ gering. Ein weiterer Nachteil besteht darin, das die langsam laufenden Förderbänder, deren Geschwindigkeit synchron zur Geschwindigkeit des Bandes der aufnehmenden Maschine ist, nur eine ungünstige Belegung mit Gegenständen aufweisen, so das insgesamt, bezogen auf die Gesamtlänge der Fördereinrichtung, nur sehr wenige Gegenstände abgelegt werden können. Daraus ergibt sich eine sehr ungünstige Dimensionierung der Anlage, da diese eine erhebliche Länge aufweisen muß.

Der Erfindung liegt die Aufgabe zugrunde, eine Vorrichtung und ein Verfahren der eingangs genannten Art zu schaffen, welche bei einfachem Aufbau und einfacher Anwendbarkeit eine Synchronisierung und Förderung von Gegenständen so ermöglicht, daß diese phasengenau an eine aufnehmende Maschine übergeben werden können, wobei ein hoher Wirkungsgrad und eine präzise Bewegung der Gegenstände sichergestellt ist.

Die Aufgabe wird dadurch gelöst, daß das erste und das zweite Förderband mit einer größeren Geschwindigkeit bewegt werden, als das Aufnahmeband, d.h., daß das Aufnahmeband langsamer läuft, als die Förderbänder. Diese Ausgestaltungsform sowohl des Verfahrens als auch der Vorrichtung ergibt den besonderen Vorteil, daß die Lage der einzelnen Gegenstände exakt einstellbar und ausrichtbar ist, da zwischen den einzelnen Gegenständen auf den Förderbändern jeweils ein ausreichender Platz zur Verfügung steht, d.h., eine ausreichende Wegstrecke der einzelnen Gegenstände zurückgelegt wird, um die jeweiligen Einjustierungen und Anpassungen vorzunehmen.

In einer günstigen Weiterbildung des Verfahrens ist vorgesehen, daß das Synchronisationsband die Gegenstände wahlweise beschleunigt oder verlangsamt, so daß diese in nur einem Synchronisationsbereich in ihrer Phase ausgerichtet werden können. Daraus ergibt sich, im Vergleich zu dem bekannten Stand der Technik, der erhebliche Vorteil, daß der Synchronisiervorgang wesentlich einfacher ausgestaltet werden kann, da nur eine einfache Synchronisierung für die phasenmäßige Anpassung ausreichend ist.

In einer besonders günstigen Ausgestaltung der Erfindung ist vorgesehen, daß das erste und zweite Förderband mindestens mit der 1,3-fachen Geschwindigkeit des Aufnahmebandes laufen, bevorzugterweise jedoch mit der 1,6-fachen Geschwindigkeit. Dabei kann es sich als günstig erweisen, wenn die maximale Geschwindigkeit der Förderbänder bis zu 3 m/Sekunde beträgt. Daraus ergibt sich eine sehr hohe Förderrate, welche die gesamte Dimensionierung der Anlage begunstigt.

Um die jeweilige Lage des angeforderten Gegenstandes zu erfassen und um zu entscheiden, in welcher Weise dieser in seiner Phasenausrichtung verändert werden muß, d.h., ob der Gegenstand beschleunigt oder verlangsamt werden muß, ist erfindungsgemäß im Bereich des ersten Förderbandes eine Sensoreinrichtung angeordnet, welche beispielsweise in Form einer Lichtschranke ausgebildet sein kann. Mittels der Sensoreinrichtung ist es möglich, die Breite des Gegenstandes zu messen, d.h., festzustellen, welche Zeit benötigt wird, um diesen bei einer vorgegebenen Fördergeschwindigkeit des Förderbandes an dem Sensor vorbeizubewegen. Aus der Breite des Gegenstandes kann in einfacher Weise der Schwerpunkt des Gegenstandes bestimmt werden, welcher üblicherweise mit der geometrischen Mitte des Gegenstandes übereinstimmt. Die Synchronisierung kann erfindungsgemäß hinsichtlich des Schwerpunkts des Gegenstandes erfolgen und ist nicht, wie beim Stand der Technik, auf eine reine Dimensionierung des Gegenstandes angewiesen. Der Vorteil der Zuordnung zu dem Schwerpunkt liegt darin, daß der Übergang des Gegenstandes von einem Förderband auf ein weiteres Band oder umgekehrt dadurch optimiert wird. Es ist somit möglich, in Abhängigkeit von der Phasenabweichung das Synchronisierband bzw. die Synchronisierbänder so zu steuern, daß diese jeweils bereits die Soll-Geschwindigkeit für den jeweiligen Gegenstand erreicht haben, wenn dessen Schwerpunkt auf die Synchronisierbänder übergeleitet wird.

In einer besonders bevorzugten Ausgestaltung der Erfindung ist vorgesehen, daß das Synchronisierband eine Länge aufweist, welche gerade der Länge mal dem Geschwindigkeitsfaktor des ersten und zweiten Förderbandes zum Aufnahmeband des jeweiligen Gegenstands entspricht. Da die Synchronisierung hinsichtlich des Schwerpunkts vorgenommen wird, ist eine derartige Länge des Synchronisierbandes ausreichend und die Gesamtanlage wird somit in ihren Abmessungen erheblich verringert.

Erfindungsgemäß ist es weiterhin vorteilhaft, als Aufnahmeband ein Becherband vorzusehen, in dessen einzelne Becher die Gegenstände übergeben werden können. Eine übergabe erfolgt dabei vorteilhafterweise in der umgelenkten Position des Becherbandes, in welche die außenliegenden Begrenzungsflächen der Trennwände - eine größere Öffnung aufweisen, als ihre Fußpunkte. Der Gegenstand wird somit in das Becherband eingeschoben und rutscht aufgrund seiner Eigengeschwindigkeit gegen die vordere Begrenzungswand. Die hintere Begrenzungswand des Becherbandes, welches sich in der geraden Transportbahn des Becherbandes wieder im wesentlichen senkrecht aufstellt, braucht somit den Gegenstand im Idealfall nicht weiter zu verschieben, da dieser bereits exakt positioniert ist. Es ist jedoch möglich, kleinere Positionierungsungenauigkeiten mit Hilfe des Becherbandes auszugleichen. Erfindungsgemäß ist somit sowohl eine genaue Positionierung des Gegenstandes in dem jeweiligen Becher des Becherbandes gewährleistet, als auch eine Anpassungsmöglichkeit des Becherbandes an die jeweiligen Gegenstände, da die Becher nicht größer sein müssen, als die Länge bzw. Breite des Gegenstandes.

Die Geschwindigkeitsdifferenz zwischen den Förderbändern und dem Becherband beträgt bevorzugterweise den Faktor 0,6, d.h., die Förderbänder laufen mit der 1,6-fachen Geschwindigkeit des Becherbandes. Hierdurch wird zum einen eine günstige Vereinzelung der einzelnen Gegenstände erhalten, zum anderen ist die Geschwindigkeitsdifferenz ausreichend, um eine dynamische Zwischenspeicherung von einem Gegenstand zu erhalten. Das bedeutet, daß auf dem zuführenden Band ein Gegenstand pro Zeitraum mehr angeordnet sein kann, als von dem abführenden Band oder Becherband abtransportiert werden kann.

Die Geschwindigkeitsdifferenz zwischen dem Aufnahmeband oder Becherband und den Förderbändern dient somit dazu, die über eine weitere, vorgeschaltete Fördereinrichtung zugeführten Gegenstände aufzunehmen, zu beschleunigen und in ihrem Abstand zu vergrößern, d.h., zu vereinzeln. Es erfolgt somit erfindungsgemäß eine Vergrößerung des Abstandes der durch die vorgeschaltete Fördereinrichtung relativ dicht aneinanderliegenden Gegenstände, welche die Möglichkeit schafft, die jeweilige Position des Gegenstandes exakt der Phasenlage des Aufnahmebandes oder Becherbandes anzupassen.

Um zu verhindern, daß der jeweilige Platz in dem Aufnahmeband oder Becherband bereits besetzt ist, ist vorgesehen, daß vor dem Einlegen eines Gegenstandes überprüft wird, ob der Becher des Becherbandes frei ist. Sollte dies nicht der Fall sein, so kann der Gegenstand verzögert und in den nächsten Becher abgelegt werden. Auch hierdurch ergibt sich der Vorteil der sog. dynamischen Speicherung, d.h., auf den zuführenden Bändern. kann sich ein Gegenstand mehr befinden, als vom Becherband abgeführt wird. Die Menge der in der erfindungsgemäßen Anlage zu handhabenden Gegenstände ist somit im Rahmen einer 1:1 Belegung vorgegeben, d.h., es können genau so viele Gegenstände zugeführt werden, wie von dem Aufnahmeband oder Becherband weiterbearbeitet werden können, wobei durch die dynamische Speicherung ein zusätzlicher Gegenstand dynamisch zwischengespeichert werden kann.

In Abhängigkeit von der Geschwindigkeit des Aufnahmebandes oder Becherbandes ist es möglich, ein, zwei oder drei Synchronisierbänder zu verwenden. Bis zu einer Geschwindigkeit des Aufnahmebandes von etwa 0,5 m/Sekunde ist dabei ein Synchronisierband vorzusehen, bis zu einer Geschwindigkeit von etwa 1,5 m/Sekunde sind zwei Synchronisierbänder zu verwenden und oberhalb dieser Geschwindigkeit von 1,5 m/Sekunde ist es günstig, drei Synchronisierbänder vorzusehen. Bei der Verwendung von zwei Synchronisierbändern ist es günstig, wenn diese stets mit der gleichen Geschwindigkeit für jeden Gegenstand betrieben werden, so daß der Schlupf bei dem jeweiligen Gegenstand bei der übergabe von dem Förderband auf das nachgeordnete Synchronisierband etwa gleich groß ist, wie bei der Übergabe von dem zweiten Synchronisierband auf das nachgeordnete Förderband. Dies bedeutet, daß die Schlupfbewegungen, welche nicht linear mit der Geschwindigkeitsdifferenz sind, unberücksichtigt bleiben können, wodurch sich die Steuerung der gesamten Anlage wesentlich vereinfacht.

Bei der Verwendung von drei Sychronisierbändern ist sicherzustellen, daß die beiden außenliegenden Synchronisierbänder jeweils mit der gleichen Geschwindigkeit bewegt werden. Das mittlere Synchronisierband kann eine unterschiedliche Geschwindigkeit aufweisen. Es liegen somit auch bei drei Synchronisierbändern symmetrische Verhältnisse vor, welche eine Vernachlässigung der Schlupfbewegungen zulassen.

Weiterhin ist es erfindungsgemäß günstig, wenn die Regelung der Anlageverhältnisse synchron ausgebildet ist, so daß die jeweiligen Bänder aus jeder Lage gestoppt bzw. wieder angefahren werden können.

Im Folgenden wird die Erfindung anhand eines Ausführungsbeispiels in Verbindung mit der Zeichnung beschrieben. Dabei zeigt:

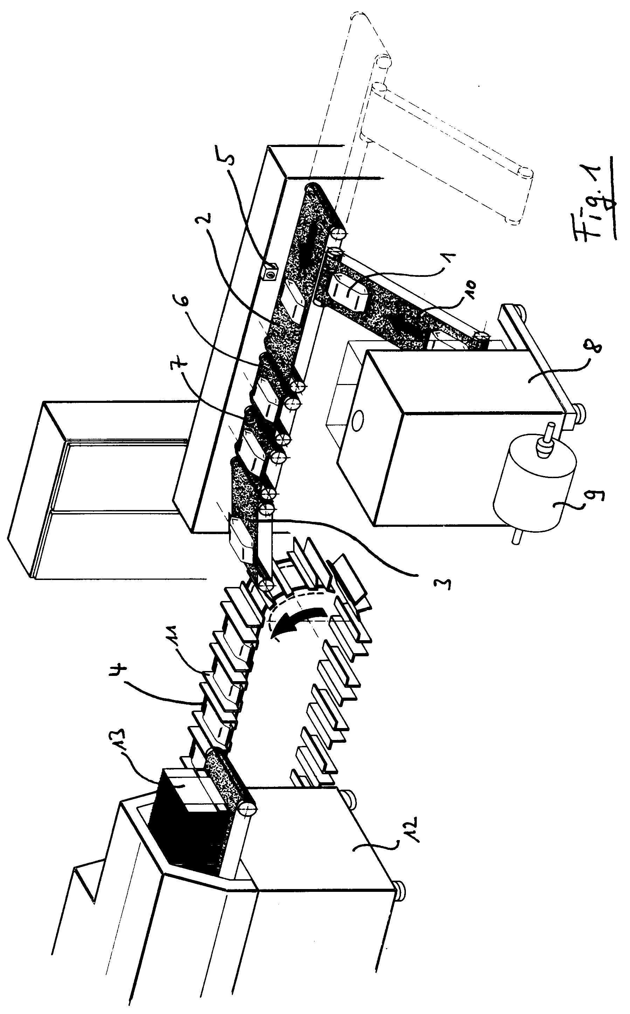

- Figur 1: eine perspektivische Teilansicht eines Ausruhrungsbeispiels einer Anlage unter Verwendung der erfindungsgemäßen Vorrichtung.

Bei der in Figur 1 gezeigten Anlage handelt es sich um eine Anlage zur Herstellung und Befullung sowie Abpackung von Beutein, welche aus einem an beiden Enden verschweißten oder versiegelten Schlauchbeutel bestehen. In schematischer Weise ist deshalb in Figur 1 eine Fülleinrichtung 8 abgebildet, in welcher das Material für die Beutel oder Gegenstände 1 in Form einer auf einer Rolle 9 angeordneten Bahn zugeführt wird. Die Zuführung des in die Beutel oder Gegenstände 1 abzufüllenden Inhalts ist aus Gründen der Vereinfachung nicht gezeigt. Anschließend an die Fülleinrichtung 8 ist ein Förderer 10 vorgesehen, welcher ein schräg nach oben geneigtes Förderband umfaßt. Von diesem Förderer 10 werden die Gegenstände 1 auf ein horizontal laufendes erstes Förderband 2 übergeben. Es ist auch möglich, wie in der rechten Hälfte von Figur 1 strichpunktiert dargestellt, weitere Fülleinrichtungen oder ähnliches vorzusehen und beispielsweise das erste Förderband 2 verlängert auszubilden.

Im Bereich des ersten Förderbandes 2 ist eine Sensoreinrichtung 5 angeordnet, welche beispielsweise in Form einer Lichtschranke ausgebildet sein kann. Mittels der Sensoreinrichtung 5 kann erfindungsgemäß der Schwerpunkt des Gegenstandes 1 ermittelt werden, weiterhin ist es möglich, die Abstände benachbarter Gegenstände 1 festzustellen und diese hinsichtlich ihrer Phasenlage einzujustieren. Die Synchronisierung oder Einjustierung erfolgt bei dem gezeigten Ausführungsbeispiel unter Verwendung zweier nachgeordneter Synchronisierbänder 6,7, welche unabhängig von dem ersten Förderband 2 angetrieben sind und die jeweiligen Gegenstände 1 beschleunigen bzw. verzögern können. Nachfolgend zu dem zweiten Synchronisierband 7 ist ein zweites Förderband 3 angeordnet, welches bei dem gezeigten Ausführungsbeispiel leicht nach unten abfallend verläuft. Das zweite Förderband 3 mündet in ein Aufnahme- oder Becherband 4, welches zur Vereinfachung der Darstellung ebenfalls nur schematisch gezeigt ist. Das Becherband 4 weist jeweils zur Ausbildung der Becher Querwände 11 auf, welche senkrecht zur Förderrichtung stehen.

Nachfolgend zu dem Aufnahme- oder Becherband 4 ist eine Verpackungsanlage 12 angeordnet, in welcher beispielsweise Faltverpackungen 13 verwendet werden können, in die die Gegenstände 1 einbringbar sind.

Erfindungsgemäß ist vorgesehen, daß das erste und das zweite Förderband 2, 3 jeweils mit der gleichen Fördergeschwindigkeit angetrieben werden und insgesamt eine Geschwindigkeit aufweisen, welche um mindestens das 1,3-fache, bevorzugterweise das 1,6-fache größer ist, wie die Geschwindigkeit des Aufnahmebandes 4. Hierdurch erfolgt eine Vereinzelung der einzelnen Gegenstände 1, welche es ermöglicht, die Position der einzelnen Gegenstände einzustellen und anzupassen.

Die Erfindung ist nicht auf das gezeigte Ausführungsbeispiel beschränkt, vielmehr ergeben sich für den Fachmann im Rahmen der Erfindung vielfältige Abwandlungs- und Modifikationsmöglichkeiten.

## Patentansprüche

1. Verfahren zur Förderung und Synchronisierung der Bewegung von Gegenständen, bei welchem die Gegenstände (1) von einem ersten Förderband (2) auf zumindest ein Synchronisierband (6;7), von diesem auf ein zweites Förderband (3) und nachfolgend auf ein Aufnahmeband (4) geleitet werden, wobei das erste und das zweite Förderband (2,3) mit gleicher Geschwindigkeit bewegt werden,
dadurch gekennzeichnet, daß
a) das erste und das zweite Förderband (2,3) mit einer größeren Geschwindigkeit bewegt werden als das Aufnahmeband (4) und
b) das Synchronisierband (6;7) die Gegenstände (1) in Abhängigkeit von der Phasenabweichung der Gegenstände (1) von einer auf das Aufnahmeband (4) bezogenen Soll-Lage der Gegenstände (1) wahlweise beschleunigt oder verlangsamt.

2. Verfahren nach Anspruch 1, dadurch gekennzeichnet, daß
a) im Bereich des ersten Förderbandes (2) der Schwerpunkt des jeweiligen Gegenstandes (1) und dessen Phasenabweichung mittels einer Sensoreinrichtung (5) ermittelt werden und
b) das Synchronisierband (6;7) so gesteuert wird, daß es die Soll-Geschwindigkeit erreicht hat, wenn der Schwerpunkt des Gegenstandes (1) auch das Synchronsierband (6;7) erreicht

3. Verfahren nach einem der Ansprüche 1 oder 2, dadurch gekennzeichnet, daß das erste und das zweite Förderband (2,3) mit mindestens der 1,3-fachen Geschwindigkeit des Aufnahmebandes (4) betätigt werden.

4. Verfahren nach einem der Ansprüche 1 bis 3, dadurch gekennzeichnet, daß das erste und das zweite Förderband (2,3) mit der 1,6-fachen Geschwindigkeit des Aufnahmebandes (4) laufen.

5. Verfahren nach einem der Ansprüche 1 bis 4, dadurch gekennzeichnet, daß als Aufnahmeband (4) ein Becherband verwendet wird, und der Gegenstand (1) in der oben gelenkten Position des Becherbandes (4) auf dieses übergeben wird.

6. Verfahren nach Anspruch 5, dadurch gekennzeichnet, das vor Einlegen eines Gegenstandes (1) in einen Becher des Becherbandes (4) überprüft wird, ob dieser frei ist.

7. Vorrichtung zur Förderung und Synchronisierung der Bewegung von Gegenständen, insbesondere zur Durchführung des Verfahrens nach einem der Ansprüche 1 bis 6, mit einem ersten Förderband (2) und einem zweiten Förderband (3), welches einem Aufnahmeband (4) vorgeordnet ist, und mit einer zwischen dem ersten Förderband (2) und dem zweiten Förderband (3) angeordneten Synchronisiereinrichtung, welche zumindest ein Synchronisierband umfaßt, wobei das erste und das zweite Förderband (2,3) mit gleicher Geschwindigkeit angetrieben sind, dadurch gekennzeichnet, daß das Aufnahmeband (4) langsamer läuft, als die Förderbänder (2,3), daß das Synchronisierband (6;7) die Gegenstände (1) in Abhängigkeit von der Phasenabweichung der Gegenstände (1) von einer auf das Aufnahmeband (4) bezogenen Soll-Lage der Gegenstände (1) wahlweise beschleunigt oder verlangsamt.

8. Vorrichtung nach Anspruch 7, dadurch gekennzeichnet, daß die Förderbänder (2,3) mit mindestens der 1,3-fachen, bevorzugt der 1,6-fachen Geschwindigkeit des Aufnahmebandes (4) bewegt werden.

9. Vorrichtung nach einem der Ansprüche 7 und 8, dadurch gekennzeichnet, daß die maximale Geschwindigkeit der Förderbänder (2,3) 3 m/Sekunde beträgt.

10. Vorrichtung nach einem der Ansprüche 7 bis 9, dadurch gekennzeichnet, daß die Lage des Gegenstandes (1) auf dem Förderband (2) mittels zumindest eines Sensors (z.B. Lichtschranke) (5) ermittelt wird.

11. Vorrichtung nach einem der Ansprüche 7 bis 10, dadurch gekennzeichnet, daß bei einer Geschwindigkeit des Aufnahmebandes bis etwa 0,5 m/Sekunde ein Synchronisierband vorgesehen ist.

12. Vorrichtung nach einem der Ansprüche 7 bis 11, dadurch gekennzeichnet, daß bei einer Geschwindigkeit des Aufnahmebandes (4) bis etwa 1,5 m/Sekunde zwei Synchronisierbänder (6,7) vorgesehen sind.

13. Vorrichtung nach einem der Ansprüche 7 bis 12, dadurch gekennzeichnet, daß bei einer Geschwindigkeit des Aufnahmebandes (4) über 1,5 m/Sekunde drei Synchronisierbänder vorgesehen sind.

14. Vorrichtung nach Anspruch 14, dadurch gekennzeichnet, daß das in Förderrichtung erste und das letzte Synchronisierband mit gleicher Geschwindigkeit bewegt werden.

15. Vorrichtung nach einem der Ansprüche 8 bis 15, dadurch gekennzeichnet, daß das Aufnahmeband (4) als Becherband ausgestaltet ist.

## Claims

1. A method of conveying and synchronizing the movement of objects, in which the objects (1) are guided from a first conveyor belt (2) onto at least one synchronizing belt (6; 7), from the latter onto a second conveyor belt (3) and after that onto a take-up belt (4), wherein the first and the second conveyor belts (2; 3) are moved at the same speed, **characterized in that**
a) the first and the second conveyor belts (2,3) are moved at a higher speed than the take-up belt (4), and
b) the synchronizing belt (6; 7) optionally accelerates or retards the objects (1) as a function of the phase deviation of the objects (1) from a nominal position of the objects (1) relative to the take-up belt (4).

2. A method according to Claim 1, **characterized in that**
a) in the region of the first conveyor belt (2) the centre of gravity of the respective object (1) and the phase deviation thereof are detected by means of a sensor device (5), and
b) the synchronizing belt (6; 7) is controlled in such a way that it has reached the nominal speed when the centre of gravity of the object (1) also reaches the synchronizing belt (6,7).

3. A method according to one of Claims 1 or 2, **characterized in that** the first and the second conveyor belts (2, 3) are actuated at a speed at least 1^{.}3 times the speed of the take-up belt (4).

4. A method according to one of Claims 1 to 3, **characterized in that** the first and the second conveyor belts (2,3) run at a speed at least 1^{.}6 times the speed of the take-up belt (4).

5. A method according to one of Claims 1 to 4, **characterized in that** a bucket belt is used as the take-up belt (4), and the object (1) is transferred to the bucket belt (4) in the position thereof deflected upwards.

6. A method according to Claim 5, **characterized in that** before an object (1) is inserted in a bucket of the bucket belt (4) a check is made to see whether the said bucket is free.

7. A device for conveying and synchronizing the movement of objects, in particular for performing the method according to one of Claims 1 to 6, with first conveyor belt (2) and a second conveyor belt (3), which is arranged upstream of a take-up belt (4), and with a synchronizing device arranged between the first conveyor belt (2) and the second conveyor belt (3) and comprising at least one synchronizing belt, wherein the first and the second conveyor belts (2, 3) are driven at the same speed, **characterized in that** the take-up belt (4) runs more slowly than the conveyor belts (2, 3), [and] the synchronizing belt (6; 7) optionally accelerates or retards the objects (1) as a function of the phase deviation of the objects (1) from a nominal position of the objects (1) relative to the take-up belt (4).

8. A device according to Claim 7, **characterized in that** the conveyor belts (2, 3) are moved at a speed at least 1^{.}3 times, preferably 1^{.}6 times, the speed of the take-up belt (4).

9. A device according to one of Claims 7 and 8**, characterized in that** the maximum speed of the conveyor belts (2, 3) amounts to 3 m/sec.

10. A device according to one of Claims 7 to 9, **characterized in that** the position of the object (1) on the conveyor belt (2) is determined by means of at least one sensor (for example a light barrier) (5).

11. A device according to one of Claims 7 to 10, **characterized in that** with a speed of the take-up belt of up to approximately 0^{.}5 m/sec. one synchronizing belt is provided.

12. A device according to one of Claims 7 to 11**, characterized in that** with a speed of the take-up belt (4) of up to approximately 1^{.}5 m/sec. two synchronizing belts (6, 7) are provided.

13. A device according to one of Claims 7 to 12, **characterized in that** with a speed of the take-up belt (4) of over approximately 1^{.}5 m/sec. three synchronizing belts are provided.

14. A device according to Claim 14 [*sic*], **characterized in that** the first and the last synchronizing belts in the conveying direction are moved at the same speed.

15. A device according to one of Claims 8 to 15 [*sic*], **characterized in that** the take-up belt (4) is constructed in the form of a bucket belt.

## Revendications

1. Procédé pour convoyer et synchroniser le déplacement d'objets, dans lequel les objets (1) sont acheminés depuis une première bande transporteuse (2) sur au moins une bande de synchronisation (6 ; 7), et depuis cette dernière sur une deuxième bande transporteuse (3) puis sur une bande réceptrice (4), la première et la deuxième bandes transporteuses (2, 3) étant actionnées à la même vitesse,
caractérisé en ce que,
a) la première et la deuxième bandes transporteuses (2, 3) sont actionnées à une vitesse supérieure à celle de la bande réceptrice (4) et
b) la bande de synchronisation (6 ; 7) accélère ou ralentit au choix les objets (1) en fonction du décalage de phase des objets (1) par comparaison avec une position de consigne de ces objets (1) par rapport à la bande réceptrice (4).

2. Procédé selon la revendication 1, caractérisé en ce que
a) dans le secteur de la première bande transporteuse (2) le centre de gravité de chaque objet (1) et son décalage de phase sont déterminés au moyen d'un dispositif (5) de détection, et
b) la bande de synchronisation (6 ; 7) est commandée de manière telle qu'elle a atteint la vitesse de consigne lorsque le centre de gravité de l'objet (1) a également atteint la bande de synchronisation (6 ; 7).

3. Procédé selon l'une quelconque des revendications 1 ou 2, caractérisé en ce que la première et la deuxième bandes transporteuses (2, 3) sont actionnées à au moins 1,3 fois la vitesse de la bande réceptrice (4).

4. Procédé selon l'une quelconque des revendications 1 à 3, caractérisé en ce que la première et la deuxième bandes transporteuses (2, 3) sont actionnées à 1,6 fois la vitesse de la bande réceptrice (4).

5. Procédé selon l'une quelconque des revendications 1 à 4, caractérisé en ce qu'une bande à godets est utilisée en tant que bande réceptrice (4), et en ce que l'objet (1) est transféré sur la bande à godets (4) celle-ci étant orientée vers le haut.

6. Procédé selon la revendication 5, caractérisé en ce qu'avant qu'un objet (1) ne soit déposé dans un godet, on vérifie si ledit godet est libre.

7. Dispositif pour convoyer et synchroniser le déplacement d'objets, en particulier pour mettre en oeuvre le procédé selon l'une quelconque des revendications 1 à 6, comportant une première bande transporteuse (2) et une deuxième bande transporteuse (3) qui est placée en amont d'une bande réceptrice (4), et comportant un dispositif de synchronisation disposé entre la première bande transporteuse (2) et la deuxième bande transporteuse (3), ledit dispositif de synchronisation comprenant au moins une bande de synchronisation, la première et la deuxième bandes transporteuses (2, 3) étant actionnées à la même vitesse,
caractérisé en ce que la bande réceptrice (4) circule plus lentement que les bandes transporteuses (2, 3) , en ce que la bande de synchronisation (6 ; 7) accélère ou ralentit au choix les objets (1) en fonction du décalage de phase des objets (1) par comparaison avec une position de consigne de ces objets (1) par rapport à la bande réceptrice (4).

8. Dispositif selon la revendication 7, caractérisé en ce que les bandes transporteuses (2, 3) sont actionnées au moins à 1,3 fois et de préférence à 1,6 fois la vitesse de la bande réceptrice (4).

9. Dispositif selon l'une quelconque des revendications 7 et 8, caractérisé en ce que la vitesse maximale des bandes transporteuses (2, 3) est de 3 m/seconde.

10. Dispositif selon l'une quelconque des revendications 7 à 9, caractérisé en ce que la position de l'objet (1) sur la bande transporteuse (2) est déterminée au moyen d'au moins un capteur (par exemple une barrière photo-électrique (5).

11. Dispositif selon l'une quelconque des revendications 7 à 10, caractérisé en ce qu'une bande de synchronisation est prévue, lorsque la vitesse de la bande réceptrice n'excède pas environ 0,5 m/seconde.

12. Dispositif selon l'une quelconque des revendications 7 à 11, caractérisé en ce que deux bandes de synchronisation (6 ; 7) sont prévues, lorsque la vitesse de la bande réceptrice n'excède pas environ 1,5 m/seconde.

13. Dispositif selon l'une quelconque des revendications 7 à 12, caractérisé en ce que trois bandes de synchronisation (6 ; 7) sont prévues, lorsque la vitesse de la bande réceptrice est supérieure à 1,5 m/seconde.

14. Dispositif selon la revendication 13, caractérisé en ce que la première et la dernière bandes de synchronisation dans le sens du convoyage, sont actionnées à la même vitesse.

15. Dispositif selon l'une quelconque des revendications 8 à 14, caractérisé en ce que la bande réceptrice (4) est conformée comme une bande à godets.
